# EUROPEAN PATENT APPLICATION

(11) **EP 0 764 660 A1**
(43) Date of publication of application: **26.03.1997**
(21) Application number: 96115301.2
(22) Date of filing: 24.09.1996
(51) Int. Cl.: C08C 3/00, C08J 3/20, B02C 19/18

(54) **Method of making rubber compositions**

(30) Priority: 25.09.1995 US 533342
(71) Applicant: Megill, Robert W., Newark, DE 19711 (US)
(72) Inventor: Megill, Robert W., Newark, DE 19711 (US)
(74) Representative: Wagner, Karl H., Dipl.-Ing.

(57) **Abstract**

Rubber is ground in the presence of a cryogenic agent before vulcanization, this permits the incorporation of or increase in the amount of various desirable ingredients which can be added to the rubber formulation to achieve desired properties. The vulcanization can take place at a temperature as low as 190°F.

## Description

### Government License Rights

The U.S. Government has a paid-up license in this invention and the right in limited circumstances to require the patent owner to license others on reasonable terms as provided for by the terms of N.00178-95-D-1008 awarded by U.S. Navy, Dahlgren, VA.

### Background of the Invention

Various techniques have been attempted to improve and expand the properties of rubber. It would be desirable if techniques could be provided which would permit the incorporation of or increase in the amount of certain ingredients that can be added to the rubber formulations to achieve distinct properties. It would also be desirable if rubber making techniques could be used for producing an adhesive without the need for a solvent. It would further be desirable if rubber making techniques could be achieved which permits lower vulcanization temperatures to be used.

### Summary of the Invention

An object of this invention is to provide rubber making techniques which fulfills the above desires.

A further object of this invention is to provide such techniques which can utilize conventional rubber mixing and forming equipment to achieve such desires.

In accordance with this invention the rubber ingredients are ground simultaneously with the application of a cold hardening agent such as a cryogenic material prior to the vulcanization step. The use of powder mixing allows the incorporation of fragile ingredients which would not survive conventional rubber mixing and forming equipment.

### Detailed Description

The present invention relates to the improvement in rubber making techniques wherein the rubber compound or ingredients are ground in the presence of a cold hardening agent before the vulcanization step. The cold hardening agent could be any suitable cryogenic such as dry ice or liquid nitrogen, with liquid nitrogen being the preferred cryogenic material. In accordance with this invention the grinding of the rubber takes place in the cold atmosphere to make the rubber brittle and to avoid the rubber massing back together.

In the preferred practice of the invention liquid nitrogen is sprayed into the grinder. It is preferable to prechill the rubber in liquid nitrogen just prior to the grinder. The amount of liquid nitrogen would depend on the type of grinder and the particle size that is desired which would be, for example, from 0.10 to greater than 100% by weight of N₂ which can be used. Usually, the amount of N₂ needed is from 1 to 3 times the weight of the rubber.

Any suitable grinding equipment can be used. Preferably the grinder has a port or ports where the liquid nitrogen is introduced. The invention has been successfully practiced using an attrition mill. Other types of grinding equipment that could be used include hammer mills, pin mills and Fitz mills.

Using powdered rubber allows the incorporation of, or the increase in the amount of certain desirable ingredients that can be added to rubber formulations to achieve unique properties.

After the rubber is ground the selected ingredient(s) is mixed into the powder and then vulcanized. In most cases, the rubber compound is mixed in conventional rubber processing equipment prior to grinding. However, the mixing operation can be carried out in the powder form.

The use of powder mixing allows the incorporation of the fragile ingredients (i.e. micro-balloons) which would not survive conventional rubber mixing and forming equipment.

Using the powder process also allows the incorporation of large amounts of certain materials (e.g. chopped fibers) whose concentration would be limited by viscosity buildup in conventional techniques.

The orientation, or grain, imparted to rubber during conventional rubber processing can be eliminated or greatly reduced using powder mixing. Achieving random orientation of fragile materials (e.g. carbon fibers) in a vulcanized rubber part is also possible using powder.

Examples of such desirable materials include polyaramid fibers (e.g. KEVLAR® fibers), carbon fibers, metal coated carbon or textile fibers, ceramic fibers, large amounts of nylon, cotton, polyester, etc. up to 200% more of the additives than the rubber, with 0.1-100% by weight being preferred. In addition, glass or plastic beads, and many other products that can not survive standard rubber manufacturing techniques can also be added.

The use of such additional ingredients provides many desirable properties including high impact strength, abrasion resistance, controlled conductivity, controlled density, ability to float, weight reduction, enhancement of acoustical performance, enhancement of microwave absorption and increased flex resistance. Where, for example, KEVLAR® fibers are used, 5-200% by weight of the fibers compared to the rubber is added from an equal size to a much bigger size than the rubber with the size being up to 2 inches in length. The invention has been practiced grinding to 30 mesh but can be either larger or smaller.

As indicated, the added desirable ingredients are incorporated into the rubber after the grinding step and prior to vulcanization.

A significant advantage of the present invention is in a reduction of the temperature needed for vulcanization. In the normal rubber vulcanization process the vulcanization of the rubber has been from 8 to 10 minutes at 350°F. The present invention permits the vulcanization temperature to be lowered to about 190°F which is significantly below the traditional minimum of about 275°F. This is possible because vulcanization materials can be added to the powder that are too active to be added during the normal rubber processing. This allows low melting products such as plastic beads to be vulcanized into a rubber part. The rubber can be vulcanized in accordance with the invention, in practical times at these low temperatures in a range of, for example, 190°F-250°F. The vulcanizing time could be in the range of 10 minutes to 2 hours. The thickness of the rubber part would determine the time and temperature requirements for such vulcanization.

The use of powdered rubber also permits production of an adhesive without the need for a solvent. In this practice, the adhesive ingredients are mixed as powders and then heated to form a film. This practice appears most useful (but is not limited to) a neoprene contact-bond adhesive. In this type of product, both substrates are coated and then bonded after heat activation. A flame sprayer can be used to apply the adhesive and to heat activate the bond when the substrates are combined outside of controlled factory conditions.

When producing a neoprene contact-bond adhesive, as described above, the metal oxide reaction product of the p-tertiary butyl phenolic resin is made available in a dry (non-solvent) form. This can be achieved by obtaining reacted resin from the resin manufacturer, or by reacting the base resin and isolating the dry product.

In the making of such an adhesive the powdered rubber ingredients would also be produced by grinding the rubber ingredients in the presence of a cryogenic.

The following is an example of the composition of such an adhesive.

| | PREFERRED | RANGE |
|---|---|---|
| Neoprene | 100 | 100 |
| antioxidant | 2 | 0-8 |
| magnesium oxide | 8 | 2-16 |
| tertiary bulyl phenolic resin | 45 | 10-200 |
| zinc oxide | 5 | 0-20 |
| water | 0.5 | .1-5 |

The above components would be prepared by
(a) mixing with normal rubber equipment
   neoprene
   antioxidant
   zinc oxide
   sometimes 1/2 of the MgO
(b) mixing in toluene (or other suitable solvent(s))
   tertuary butyl phenolic resin
   magnesium oxide (sometimes 1/2)
   water

Part (b) is dried (i.e. solvent evaporated) and added to part (a) during grinding or blended in after grinding.

For large scale production part (b) could be obtained from a resin supplier, thus avoiding the need for a solvent.

The advantage of this process is that the flammable, toxic, and expensive solvents are eliminated.

Part (a) is mixed on a 2 roll mill or in an internal mixer. Part (b) is usually mixed overnight in a churn for production.

In the laboratory, part (b) is mixed in a can on rolls overnight. This process can usually be carried out at ambient temperature.

If the neoprene "contact bond" adhesive is made using standard techniques, part (a) and part (b) are mixed in a solvent after part (a) has been dry mixed. The adhesive film is then applied by brushing, spraying, roller coating, etc. the adhesive is applied to both substrates to be bonded. The adhesive films on the substrates can be brought together just before the films are completely free of solvent thus forming a "Bond upon Contact" or "Contact Bond". If the films dry completely they will not bond when contacted. To reactivate the bond the two films can be coated with a thin layer of solvent (solvent reactivation) or one or both films can be heated above 160°F (above 200°F is preferred) and the films will then bond when brought together. This procedure is called heat activation or heat reactivation.

In using the powder process of this invention, the powdered adhesive is usually applied to both substrates. The adhesive can be applied and then heated to form a film. Infrared heaters are preferable but microwave heating could also be used. Microwave heating can be enhanced by adding microwave active materials to the adhesive, the simplest additive being carbon black.

The adhesive film can also be applied and formed into a film simultaneously, using a powder flame spray technique. This technique is now used to apply thermoplastic coatings on metal. The powder is blown through a flame which melts the powder so that it forms a film when it hits the substrate. The substrates can be bonded before the adhesive film cools off (<160°F). Alternatively, the films on both substrates can be allowed to cool. Then one or both films on the two substrates can be heat reactivated or heat activated using the flame from a flame sprayer or any other means to raise the temperature above 160°F.

In practice, the films are usually heated above 200°F so they can be brought together before they cool below 160°F. The two films could also be "solvent activated" although it is preferred to avoid all solvents if possible.

As can be appreciated the present invention thus has wide application in expanding the properties of rubber products.

The invention may be summarized as follows:
1. A method of making rubber wherein rubber ingredients are ground and then vulcanized, and the rubber ingredients being ground in the presence of a cold hardening agent before the vulcanization step.
2. The method wherein the cold hardening agent is a cryogenic material.
3. The method wherein the rubber ingredients are ground in a grinder, and spraying liquid nitrogen as the cryogenic material into the grinder during the grinding step.
4. The method including pre-chilling the rubber ingredients in liquid nitrogen prior to the grinding step.
5. The method wherein 1 to 3 times liquid nitrogen is used as compared to the weight of the rubber ingredients.
6. The method wherein the vulcanization step takes place at about 190°F to 250°F.
7. The method including incorporating fragile ingredients into the rubber ingredients prior to vulcanization.
8. The method wherein the fragile ingredients are incorporated into the rubber ingredients after the rubber ingredients are in powder form.
9. The method wherein the fragile ingredients include micro-balloons.
10. The method wherein there is a random orientation of the fragile ingredients after vulcanization.
11. The method including incorporating thin carbon fibers into the rubber ingredients prior to vulcanization.
12. The method including incorporating chopped fibers into the rubber ingredients prior to vulcanization.
13. The method wherein the resultant rubber produces an adhesive without the incorporation of a solvent.
14. The method wherein the ingredients forming the adhesive are mixed as powders and then heated to form a film.
15. The method wherein the adhesive is a neoprene contact-bond adhesive.
16. The method including coating two substrates with the adhesive and, bonding the substrates together after heat activation.
17. The method wherein the adhesive is applied to the substrates by a flame sprayer which heat activates the bond when the substrates are combined.

## Claims

1. A method of making rubber wherein rubber ingredients are ground and then vulcanized, and the rubber ingredients being ground in the presence of a cold hardening agent before the vulcanization step.

2. The method of Claim 1 wherein the cold hardening agent is a cryogenic material.

3. The method of Claim 2 wherein the rubber ingredients are ground in a grinder, and spraying liquid nitrogen as the cryogenic material into the grinder during the grinding step.

4. The method of Claim 1 wherein the vulcanization step takes place at about 190°F to 250°F.

5. The method of Claim 1 including incorporating fragile ingredients into the rubber ingredients prior to vulcanization.

6. The method of Claim 7 wherein the fragile ingredients are incorporated into the rubber ingredients after the rubber ingredients are in powder form.

7. The method of Claim 7 wherein there is a random orientation of the fragile ingredients after vulcanization.

8. The method of Claim 1 wherein the resultant rubber produces an adhesive without the incorporation of a solvent.

9. The method of Claim 13 wherein the ingredients forming the adhesive are mixed as powders and then heated to form a film.

10. The method of Claim 14 wherein the adhesive is a neoprene contact-bond adhesive.
